# DEMANDE DE BREVET EUROPEEN

(11) **EP 0 793 255 A1**
(43) Date de publication de la demande: **03.09.1997**
(21) Numéro de dépôt: 97440019.4
(22) Date de dépôt: 26.02.1997
(51) Int. Cl.: H01J 49/14, G01N 23/225

(54) **Appareil de détection et d'analyse de molécules de natures diverses**

(30) Priorité: 27.02.1996 FR 9602585
(71) Demandeur: Devienne, Fernand Marcel, F-06400 Cannes (FR)
(72) Inventeur: Devienne, Fernand Marcel, F-06400 Cannes (FR)
(74) Mandataire: Nuss, Pierre

(57) **Abrégé**

La présente invention concerne un appareil de détection et d'analyse de molécules de natures diverses.

Appareil caractérisé en ce qu'il est constitué par l'assemblage de différents modules (1, 2', 2", 3', 3") dont chacun comporte un ou plusieurs élément(s) constitutif(s) d'un dispositif de génération d'un jet moléculaire neutre de relativement grande énergie (entre 1000 et 10000 eV), d'un dispositif de support ou de réception d'un échantillon à analyser et d'un dispositif de filtrage et de détection des ions secondaires émis par le corps formant l'échantillon à analyser, ces modules (1, 2', 2", 3', 3") pouvant être assemblés de manière à constituer soit un appareil de détection et d'analyse d'un échantillon sous la forme d'un solide, d'un liquide, d'une poudre ou d'une suspension dans un liquide, soit un appareil de détection et d'analyse d'un échantillon sous la forme d'un gaz, d'un mélange de gaz ou d'un aérosol.

## Description

La présente invention concerne le domaine de l'analyse chimique de corps de diverses natures et a pour objet un appareil de détection et d'analyse de molécules pouvant appartenir à un solide, un liquide, une poudre, un gaz, un mélange gazeux ou à des corps biologiques chimiques ou organiques sous forme d'aérosols.

Actuellement l'analyse des divers types de corps précités nécessite la mise en oeuvre de plusieurs appareils distincts ou, en cas d'utilisation d'un unique appareil, des modifications longues et fastidieuses en cas de changement de la nature du corps à analyser.

Ainsi, le principal problème posé à la présente invention consiste à concevoir et à fournir un appareil de détection et d'analyse de molécules permettant de passer rapidement de l'analyse d'un corps sous forme solide ou liquide à l'analyse d'un corps sous forme gazeuse, en n'effectuant que des manipulations simples, ledit appareil devant, en outre, présenter une structure compacte.

A cet effet, la présente invention a pour objet un appareil de détection et d'analyse de molécules de natures diverses, caractérisé en ce qu'il est constitué par l'assemblage de différents modules dont chacun comporte un ou plusieurs élément(s) constitutif(s) d'un dispositif de génération d'un jet moléculaire neutre énergétique, d'un dispositif de support ou de réception d'un échantillon à analyser et/ou d'un dispositif de filtrage et de détection des ions secondaires émis par le corps formant l'échantillon à analyser, ces modules pouvant être assemblés de manière à constituer soit un appareil de détection et d'analyse d'un échantillon sous la forme d'un solide, d'un liquide, d'une poudre ou d'une suspension dans un liquide, soit un appareil de détection et d'analyse d'un échantillon sous la forme d'un gaz, d'un mélange de gaz ou d'un aérosol.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique des modules formant l'appareil ;
la figure 2 est une vue de dessus des modules formant l'appareil selon l'invention, configurés pour une analyse d'un échantillon solide, liquide ou d'une poudre ;
la figure 3 est une vue identique à celle de la figure 2 des modules formant l'appareil, configurés pour une analyse d'un échantillon gazeux, et,
la figure 4 est une vue de dessus de l'appareil selon l'invention, montrant notamment le support qui permet de maintenir celui-ci en position verticale et de faire varier l'angle entre l'axe de la cible et la verticale, de façon à obtenir une cible horizontale, ou une inclinaison de plus ou moins 30° par rapport à cette position.

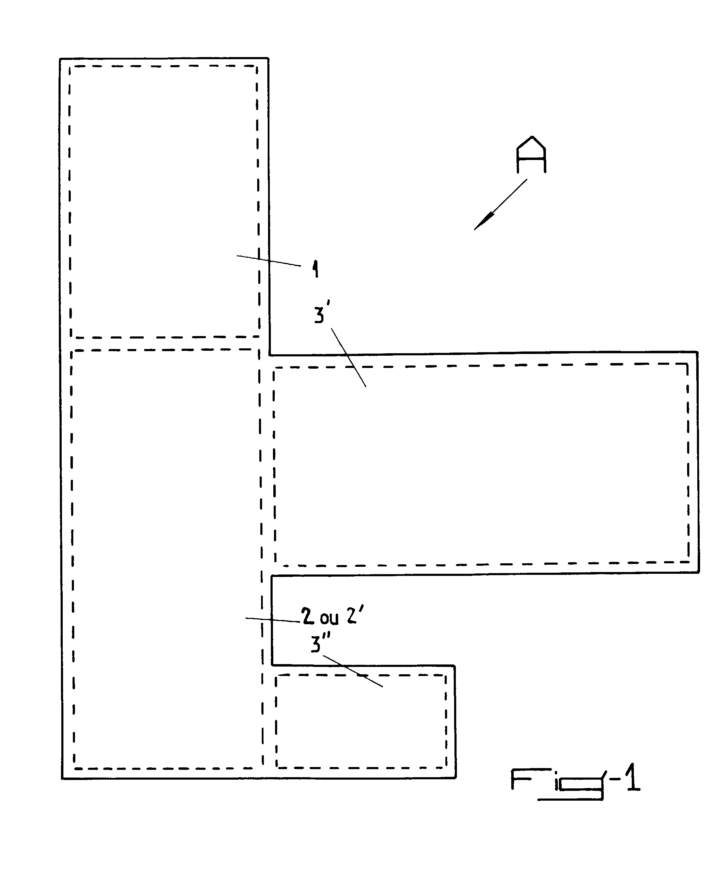

Comme le montrent les figures 1 à 4 des dessins annexés, l'appareil A de détection et d'analyse de molécules de natures diverses est constitué par l'assemblage de différents modules 1, 2', 2", 3', 3" dont chacun comporte un ou plusieurs élément(s) constitutif(s) d'un dispositif SI, L1, BE' ou BE" de génération d'un jet moléculaire neutre énergétique 5, d'un dispositif BC' ou BC" de support ou de réception d'un échantillon 6 à analyser et d'un dispositif BD' ou BD", AE' ou AE", D' ou D" de filtrage et de détection des ions secondaires 7 émis par le corps formant l'échantillon 6 à analyser, ces modules 1, 2', 2", 3', 3" pouvant être assemblés de manière à constituer soit un appareil A' de détection et d'analyse d'un échantillon 6 sous la forme d'un solide, d'un liquide, d'une poudre ou d'une suspension dans un liquide (modules 1, 2' et 3'), soit un appareil A" de détection et d'analyse d'un échantillon 6 sous la forme d'un gaz, d'un mélange de gaz ou d'un aérosol (modules 1, 2" et 3").

Le module 1, commun aux appareils A' et A" comprend une source d'ions SI et un jeu de lentilles L1.

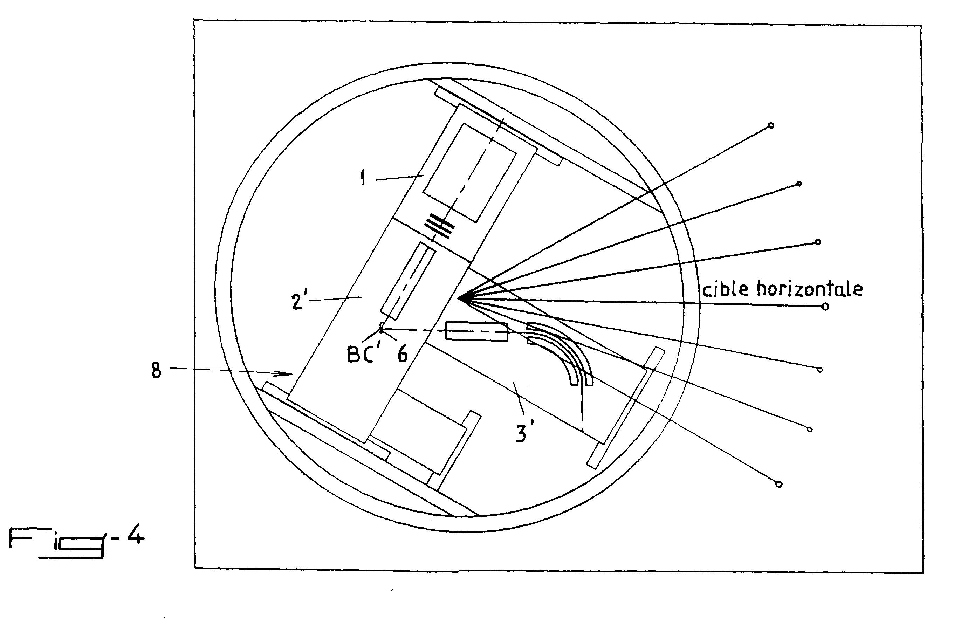

L'appareil A' se compose, en plus du module 1 :
- du module 2', qui comprend une boîte d'échange de charge BE', un support de cible BC', pouvant accueillir soit une cible solide, soit une poudre ou un liquide (lorsque l'appareil est en position verticale sur son support rotatif, comme décrit figure 4), et un jeu de lentilles L2' et,
- du module 3', qui comprend une boîte de dissociation BD', un analyseur électrostatique AE' et un détecteur D'.

L'appareil A" se compose, en plus du module module 1 :
- du module 2", qui comprend une boîte d'échange de charge BE", une boîte de collision BC" recevant le gaz cible à analyser, une boîte de dissociation BD" et un analyseur électrostatique AE" et,
- du module 3", qui comprend un détecteur D".

La structure support ou carcasse de l'appareil est formée par trois portions de tube assemblées entre elles par soudage et formant une enceinte étanche. Les modules 1, 2', 2", 3', 3" peuvent être introduits dans les tubes destinés à les recevoir avec ajustement, en permettant leur introduction par glissement dans ces derniers (figure 4).

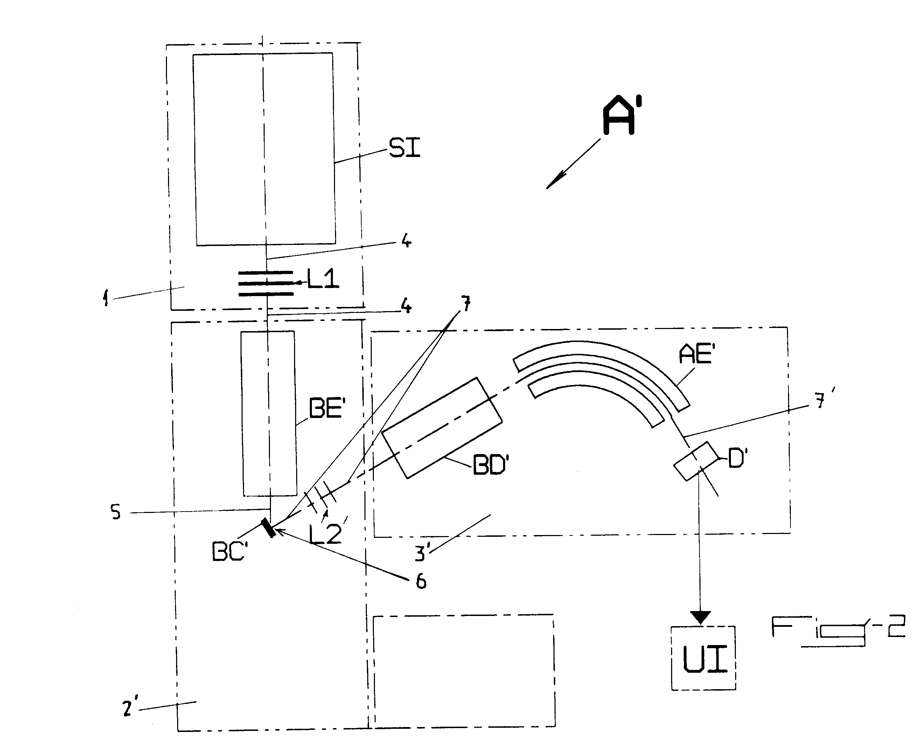

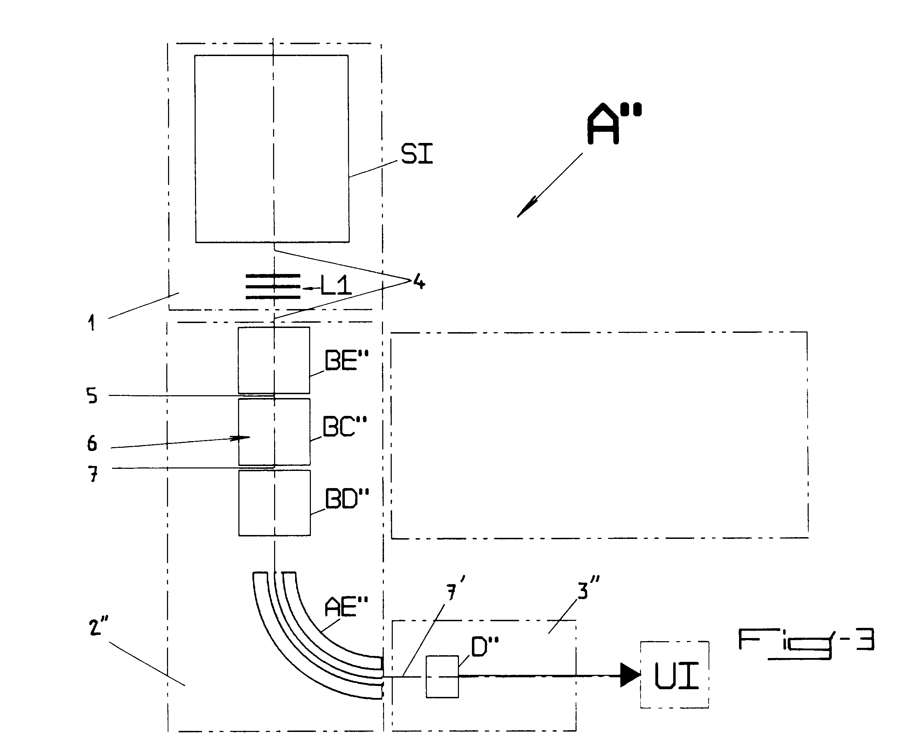

Selon une première caractéristique de l'invention, représentée en particulier aux figures 2 et 3 des dessins annexés, le dispositif de génération d'un jet moléculaire neutre 4 de relativement grande énergie (comprise entre 1000 et 10000 eV) comprend une source d'ions SI formés à partir d'un gaz rare, tel que l'argon ou le krypton, au moins une lentille L1 assurant la concentration du faisceau d'ions 4 issu de ladite source SI portée à une tension V₀ et une boîte d'échange de charge BE' ou BE" contenant un gaz de même nature que les ions formant le faisceau d'ions 4 précité, et délivrant à sa sortie un jet moléculaire neutre énergétique 5 d'une énergie eV₀, ce après échange de charge résonnant entre les ions dudit faisceau 4 et les atomes ou molécules dudit gaz contenu dans la boîte d'échange de charge BE' ou BE".

Les avantages liés à l'utilisation de jets moléculaires purs (ne comportant pas de particules chargées), ont déjà été décrits dans le brevet français n° 2 257 084. Ces avantages sont les suivants :
- la résolution spatiale est très bonne, car les molécules (ou les atomes) étant neutres, elles (ils) ne font pas intervenir la charge d'espace ;
- les collisions étant moins nuisibles que dans le cas d'un jet de particules chargées, on peut obtenir les pics parents de corps facilement dissociables alors qu'on ne les obtient pas par bombardement électronique ;
- il ne se forme pas, à la surface de corps isolants, de charge d'espace empêchant la pénétration des particules en les dispersant.

Comme le montrent les figures 2 et 3, le jet moléculaire neutre 5 sortant de la boîte d'échange de charge BE' ou BE" percute le corps formant l'échantillon 6 ou la cible à analyser.

Sous l'impact du faisceau ou jet moléculaire neutre 5 de haute énergie (1000 à 10000 eV), il y a génération, suite aux chocs sur les molécules du corps cible, d'une émission d'ions secondaires 7 caractéristiques du corps à analyser ("sputtering"), ces ions secondaires 7 étant ensuite pris en compte par le dispositif de filtrage et de détection, le cas échéant après focalisation par un jeu de lentilles L2' adapté.

Ce dispositif de filtrage et de détection est avantageusement constitué, d'une part, par une boîte de dissociation BD' ou BD" contenant un gaz neutre et réalisant une dissociation partielle par collision du faisceau secondaire d'ions de fragmentation 7 émis par le corps à analyser soumis au jet moléculaire neutre énergétique 5, d'autre part, par un analyseur électrostatique AE' ou AE" assurant le filtrage du faisceau d'ions secondaires de fragmentation 7 en fonction d'un niveau énergétique de filtration réglable, et, enfin, par un détecteur D' ou D" percuté par le faisceau d'ions de fragmentation filtré 7' et relié à une unité informatique UI d'évaluation et de traitement des signaux délivrés par ledit détecteur D' ou D".

Sur ladite unité informatique sont gérées également, les alimentations stabilisées de la source d'ions SI, de l'extraction des ions secondaires, des analyseurs électrostatiques AE' et AE", des détecteurs D' et D", ainsi que des différents potentiels appliqués aux lentilles L1 et L2' et aux boîtes de dissociation BD' et BD".

Lesdites boîtes de dissociation BD' ou BD", contenant un gaz rare tel que l'argon ou le krypton, présentent des fentes de telle manière que le faisceau d'ions secondaires 7 ait, en sortie, une section rectangulaire adaptée à son passage dans un des analyseurs électrostatiques AE' ou AE" suivant le dispositif.

L'énergie des composés formant le faisceau issu des boîtes de collision ou de dissociation BD' ou BD" est proportionnelle au rapport des masses de fragment au corps initial.

De cette façon, il est possible de déterminer la masse des corps dissociés, en les comparant à d'autres corps dissociés, à partir de corps témoins spéciaux, et l'on arrive, ainsi, à déterminer la masse originale du corps et la masse du corps dissocié, avec une précision comprise entre 5 et 10 millièmes de dalton.

Le faisceau filtré 7' d'ions secondaires ou de fragmentation issu de l'analyse électrostatique vient ensuite heurter un détecteur D' ou D" qui transpose les indications concernant les particules sélectionnées (énergie, intensité) dans un ordinateur UI qui donne la masse exacte et la nature du corps initial, grâce aux masses des corps dissociés obtenues.

Dans le cas de l'analyse de solides, le dispositif BC' de support d'échantillon présente des porte-échantillons ou porte-cibles adaptés à la forme et à la nature de la cible 6 (pastille, morceaux de minéraux, poudre, etc...)

Pour analyser des liquides, des poudres ou des corps granuleux, il est nécessaire que le porte-échantillon ou porte-cible soit disposé horizontalement.

A cet effet, il peut être avantageusement prévu que l'appareil A' soit monté verticalement avec faculté de pivotement autour d'un axe horizontal, l'échantillon pouvant, alors, être maintenu dans une position horizontale, ou avec un angle de plus ou moins 30° par rapport à cette position (figure 4).

En addition ou en variante de la disposition précédente, le dispositif BC' de support d'échantillon 6 peut comprendre un moyen permettant de faire varier l'inclinaison dudit échantillon 6 par rapport au jet moléculaire neutre énergétique incident 5, de manière à optimiser le taux de "sputtering" (pulvérisation) d'ions secondaires 7, ce en fonction de la nature du corps à analyser.

Dans le cas de l'analyse d'échantillons 6 gazeux, dans l'appareil A", le dispositif de réception d'un échantillon se présente sous la forme d'une boîte de collision BC".

Dans le cas de gaz lourds ou d'une pollution, il est possible d'utiliser un dispositif particulier d'introduction et de refroidissement d'échantillon gazeux dans l'appareil A', permettant d'obtenir une condensation d'une fraction dudit échantillon gazeux sur le support de cible BC'.

Ce refroidissement permet, notamment dans le cas de gaz lourds, ou de détection de pollution atmosphérique, d'augmenter la concentration de gaz et de multiplier la sensibilité par un facteur très important, afin d'obtenir une valeur de la sensibilité en général cent fois supérieure à celle obtenue avec l'appareil A", ce qui permet d'atteindre des valeurs de concentration inférieure au p.p.b.

Le moyen de refroidissement est préférentiellement adapté pour assurer la condensation des fractions gazeuses contenues dans l'air, autres que l'azote, l'oxygène, le monoxyde de carbone et la majorité des gaz rares.

Cette disposition est très importante si l'on veut, par exemple, déterminer la nature d'un composé toxique qui se trouve à l'état de traces infimes dans l'air, mais qui, absorbé par un homme en pleine santé, pendant des heures, peut produire des effets néfastes.

Il peut être prévu, par exemple, que l'échantillon ou la cible puisse être refroidi(e) à - 200°C, pour pouvoir condenser des gaz toxiques à l'état de traces infimes dans l'air, à des concentrations, en principe inférieures ou égales au p.p.b.. La condensation de ces gaz est, alors, bombardée par le jet moléculaire neutre 4 afin de les détecter et de les analyser.

Le refroidissement peut être réalisé par de l'azote liquide, par de l'hélium refroidi ou par l'effet Peltier.

Conformément à un mode de réalisation préférentiel de l'invention, représenté en particulier aux figures 2, 3 et 4 des dessins annexés, l'appareil A est constitué par des modules 1, 2', 2", 3', 3" formés chacun par un ou plusieurs élément(s) SI, L1, BE', BE", BC', BC", L2, BD', BD", AE', AE", D', D" constitutifs d'un dispositif formant l'appareil A' ou A", fixé(s) sur des plaques support correspondantes, pouvant être montées dans les logements d'un châssis 8 (structure support décrite précédemment) ou sur un tel châssis 8 et être assemblées entre elles avec précision et selon une disposition déterminée, par l'intermédiaire de moyens de guidage et de positionnement coopérant avec des moyens complémentaires faisant partie dudit châssis 8 (par exemple coopération rainures/nervures).

Ainsi, l'appareil A de détection et de mesure des concentrations de corps de formules et de natures très diverses, peut comporter, comme le montrent les figures précitées :
- une plaque support 1 portant une source d'ions SI et au moins une lentille de concentration L1 du faisceau d'ions issu de ladite source,
- une plaque support 2' portant une boîte d'échange de charge BE', un dispositif BC' de support d'échantillon 6 sous forme solide, liquide, d'une poudre ou d'une suspension dans un liquide et un jeu de lentilles L2',
- une plaque support 2" portant une boîte d'échange de charge BE", un dispositif BC" de réception d'un échantillon 6 sous forme gazeuse, une boîte de dissociation BD" et un analyseur électrostatique AE", disposés de manière alignée,
- une plaque support 3' portant une boîte de dissociation BD', un analyseur électrostatique AE' et un détecteur D', et,
- une plaque support 3" portant un détecteur D",
les plaques support 2' et 2" étant interchangeables.

Il peut, en outre, être prévu d'amener des gaz et des liquides, sans ouvrir l'appareil. De même, la cible portant un solide ou des éléments retenus par le porte-cible, etc... peut être introduite directement par un tube réducteur, sans que l'on ait à toucher au reste de l'appareil.

Ainsi selon l'invention, on peut effectuer des analyses de corps très différents sans ouvrir l'appareil ; dans certains cas, il est cependant nécessaire de le faire.

D'autre part, il est prévu un système de dégazage, qui doit permettre, en utilisant l'infrarouge qui porte les parois à une température suffisamment élevée, d'éliminer toute trace d'échanges de corps étrangers dans l'enceinte de l'appareil, dans la plupart des cas.

Il y a lieu de signaler que le volume de l'appareil A est très petit (4 à 5 litres) et, par conséquent, qu'avec un système de pompage utilisant, en particulier, un petite pompe turbomoléculaire, on peut obtenir des vides avancés, facilement de l'ordre de 10⁻⁸ à 10⁻⁹ Torr.

Il y a lieu de signaler, en outre, que la pression est mesurée de façon continue.

L'appareil selon l'invention n'étant pas très gros, ni très lourd (environ 50 kg), il peut être transporté très facilement et nécessite uniquement un branchement électrique.

De plus, plusieurs versions de l'appareil peuvent être envisagées, fonction du type d'application envisagé.

La version simple analyse des solides et des gaz classiques, par bombardement moléculaire d'énergie élevée. Puis, l'analyse des liquides ou des poudres, où il est nécessaire que le support de cible, qui est creux, et qui contient le liquide, soit horizontal. A cet effet, on fait tourner le corps de l'appareil autour d'un axe horizontal, dans son boîtier et sur son châssis, de façon à ce que le support de cible soit horizontal (ce qui est nécessaire pour les liquides, les poudres et les aérosols).

En ce qui concerne l'angle d'attaque, il peut être prévu de modifier l'inclinaison de la cible, qui est mobile sur son support, grâce à un dispositif de deux barres coulissantes, car, de l'inclinaison de la surface de la cible par rapport au jet moléculaire qui vient frapper celle-ci, dépend le rendement en ions secondaires, qui est relativement variable suivant la nature des corps.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil de détection et d'analyse de molécules, caractérisé en ce qu'il est constitué par l'assemblage de différents modules (1, 2', 2", 3', 3") dont chacun comporte un ou plusieurs élément(s) constitutif(s) d'un dispositif (SI, L1, BE' ou BE") de génération d'un jet moléculaire neutre énergétique (5), d'un dispositif (BC' ou BC") de support ou de réception d'un échantillon (6) à analyser et d'un dispositif (BD' ou BD", AE' ou AE", D' ou D") de filtrage et de détection des ions secondaires (7) émis par le corps formant l'échantillon (6) à analyser, ces modules (1, 2', 2", 3', 3") pouvant être assemblés de manière à constituer soit un appareil (A') de détection et d'analyse d'un échantillon sous la forme d'un solide, d'un liquide, d'une poudre ou d'une suspension dans un liquide, soit un appareil (A") de détection et d'analyse d'un échantillon sous la forme d'un gaz, d'un mélange de gaz ou d'un aérosol.

2. Appareil selon la revendication 1, caractérisé en ce que le dispositif de génération d'un jet moléculaire neutre (5) de relativement grande énergie, notamment entre 1000 et 10000 eV, comprend une source (SI) d'ions formés à partir d'un gaz rare, tel que l'argon ou le krypton, au moins une lentille (L1) assurant la concentration du faisceau d'ions (4) issu de ladite source (SI) et une boîte d'échange de charge (BE' ou BE") contenant un gaz de même nature que les ions formant le faisceau d'ions (4) précité, et délivrant à sa sortie un jet moléculaire neutre énergétique (5), ce après échange de charge résonnant entre les ions dudit faisceau (4) et les atomes ou molécules dudit gaz contenu dans la boîte d'échange de charge (BE' ou BE").

3. Appareil selon l'une quelconque des revendications 1 et 2, caractérisé en ce que le dispositif de filtrage et de détection est constitué, d'une part, par une boîte de dissociation (BD' ou BD") contenant un gaz neutre et réalisant une dissociation partielle par collision du faisceau secondaire d'ions de fragmentation (7) émis par le corps à analyser soumis au jet moléculaire neutre énergétique (5), d'autre part, par un analyseur électrostatique (AE' ou AE") assurant le filtrage du faisceau d'ions secondaires de fragmentation (7) en fonction d'un niveau énergétique de filtration réglable, et, enfin, par un détecteur (D' ou D") percuté par le faisceau d'ions de fragmentation filtré (7') et relié à une unité informatique (UI) d'évaluation et de traitement des signaux délivrés par ledit détecteur (D' ou D").

4. Appareil selon l'une quelconque des revendications 1 à 3, caractérisé en qu'il est monté avec faculté de pivotement autour d'un axe horizontal.

5. Appareil selon l'une quelconque des revendications I à 4, caractérisé en ce que le dispositif de support d'échantillon (BC') comprend un moyen permettant de faire varier l'inclinaison dudit échantillon (6) par rapport au jet moléculaire neutre énergétique incident (5).

6. Appareil selon l'une quelconque des revendications 1 à 5, caractérisé en ce qu'il comprend un dispositif d'introduction d'un gaz polluant à analyser et un moyen de refroidissement permettant d'obtenir la condensation d'une fraction dudit gaz, sur le support d'échantillon (BC').

7. Appareil selon la revendication 6, caractérisé en ce que le moyen de refroidissement est adapté pour assurer la condensation des fractions gazeuses contenues dans l'air, autres que l'azote, l'oxygène, le monoxyde de carbone et la majorité des gaz rares.

8. Appareil selon l'une quelconque des revendications 1 à 7, caractérisé en ce qu'il est constitué par des modules (1, 2', 2", 3', 3") formés chacun par un ou plusieurs élément(s) (SI, L1, BE', BE", BC', BC", L2', BD', BD", AE', AE", D', D") fixé(s) sur des plaques support correspondantes, pouvant être montées sur un châssis (8) ou dans les logements d'un châssis (8) et être assemblées entre elles avec précision et selon une disposition déterminée, par l'intermédiaire de moyens de guidage et de positionnement coopérant avec des moyens complémentaires faisant partie dudit châssis (8).

9. Appareil selon la revendication 8, caractérisé en ce qu'il comporte :
- une plaque support (1) portant une source d'ions (SI) et au moins une lentille de concentration (L1) du faisceau d'ions (4) issu de ladite source,
- une plaque support (2') portant une boîte d'échange de charge (BE'), un dispositif (BC') de support d'échantillon (6) sous forme solide, liquide, d'une poudre ou d'une suspension dans un liquide et un jeu de lentilles (L2'),
- une plaque support (2") portant une boîte d'échange de charge (BE"), un dispositif (BC") de réception d'un échantillon (6) sous forme gazeuse, une boîte de dissociation (BD") et un analyseur électrostatique (AE"), disposés de manière alignée,
- une plaque support (3') portant une boîte de dissociation (BD'), un analyseur électrostatique (AE') et un détecteur (D'), et,
- une plaque support (3") portant un détecteur (D"),
les plaques support (2') et (2") étant interchangeables.
